(19) Europäisches Patentamt
European Patent Office
Office européen des brevets

(11) EP 0 794 192 B1

(12) EUROPÄISCHE PATENTSCHRIFT

(45) Veröffentlichungstag und Bekanntmachung des Hinweises auf die Patenterteilung:
**19.02.2003 Patentblatt 2003/08**

(51) Int Cl.7: **C07F 17/02**, C06B 23/00, C10L 5/14

(21) Anmeldenummer: **97103781.7**

(22) Anmeldetag: **06.03.1997**

(54) **Ferrocenderivate**

Ferrocene derivatives

Dérivés de ferrocène

(84) Benannte Vertragsstaaten:
**DE ES FR GB NL**

(30) Priorität: **06.03.1996 DE 19608627**

(43) Veröffentlichungstag der Anmeldung:
**10.09.1997 Patentblatt 1997/37**

(73) Patentinhaber:
- **Octel Deutschland GmbH
44649 Herne (DE)**
- **FRAUNHOFER-GESELLSCHAFT ZUR FÖRDERUNG DER ANGEWANDTEN FORSCHUNG E.V.
80636 München (DE)**

(72) Erfinder:
- **Menke, Klaus, Dr.
76646 Bruchsal (DE)**
- **Böhnlein-Mauss, Jutta, Dr.
67346 Speyer (DE)**
- **Brehler, Klaus-Peter, Dr.
89077 Ulm (DE)**
- **Jungbluth, Hubert, Dr.
41564 Kaarst (DE)**
- **Neitsch, Horst
45892 Gelsenkirchen (DE)**

(56) Entgegenhaltungen:
**US-A- 3 968 126 US-A- 5 281 286**

- **CHEMICAL ABSTRACTS, vol. 122, no. 14, 3.April 1995 Columbus, Ohio, US; abstract no. 164852t, BOEHNLEIN-MAUSS, J. ET AL.: "deflagration and migration properties of binuclear ferrocene compounds as deflagration modifiers in composite propellants" XP002030766 & INT. ANNU. CONF. ICT, 1994, Seiten 105/1-105/21,**
- **CHEMICAL ABSTRACTS, vol. 121, no. 2, 11.Juli 1994 Columbus, Ohio, US; abstract no. 13191e, BOEHNLEIN-MAUSS, J. ET AL.: "structural influences of ferrocenes on burn rate modification of composite rocket propellants" XP002030767 & INT. ANNU. CONF. ICT, 1993, Seiten 71-1-71-19,**
- **CHEMICAL ABSTRACTS, vol. 124, no. 8, 19.Februar 1996 Columbus, Ohio, US; abstract no. 100542a, DING, T.-Z. ET AL.: "a novel combustion catalyst electrochemistry of bridged dimers of alkylferrocene" XP002030768 & GAODENG XUEXAO HUAXUE XUEBAO, Bd. 16, Nr. 7, 1995, Seiten 1066-1068,**
- **CHEMICAL ABSTRACTS, vol. 125, no. 16, 14.Oktober 1996 Columbus, Ohio, US; abstract no. 200009w, JUNGBLUTH, H. ET AL.: "ferrocenes: highly efficient burning modifiers for composite rocket- and gas-generating propellants" XP002030769 & INT. ANNU. CONF. ICT, 1996, Seiten 147.1-147.17,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 794 192 B1

## Beschreibung

Die Erfindung betrifft Ferrocenderivate der allgemeinen Formel

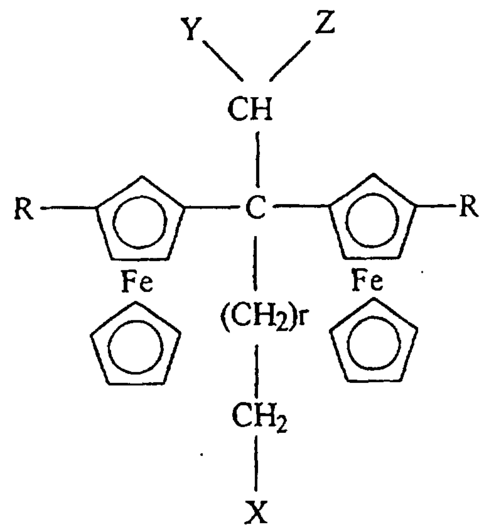

mit
X = H oder OH
Y = H oder $CH_2OH$
Z = $(CH2)_s$-$CH_2OH$
R = geradkettiger oder verzweigter Alkylrest mit 2 bis 6 C-Atomen
r = 0 bis 8, bevorzugt 0 bis 2
s = 0 bis 8, bevorzugt 1 und 2
sowie deren Verwendung.

Ferrocenderivate werden u. a. als Abbrandmodifikatoren für Raketenfesttreibstoffe verwendet. Dabei werden sie bevorzugt in ammoniumperchlorathaltigen Composittreibstoffen eingesetzt. In geringer Zugabemenge erhöhen sie wesentlich die Abbrandgeschwindigkeiten bei niederem Druck und erniedrigen zugleich den Druckexponenten, der den exponentiellen Anstieg der Abbrandgeschwindigkeit mit steigendem Druck nach dem Vieillesche Gesetz beschreibt.

Als Formel ausgedrückt:

$$r = A \cdot p^n$$

mit
r = Abbrandgeschwindigkeit
A = Konstante
p = Druck
n = Druckexponent

Der Druckexponent n, der für schnellbrennende Composittreibstoffe häufig n = 0,5 bis 0,6 beträgt, wird durch Beifügung eines Ferrocenderivates zum Treibstoff auf einen Wert von n = 0,1 bis 0,4 reduziert.

Für Composittreibstoffe mit hydroxyterminierten Polybutadienen als Binder haben sich substituierte Ferrocenderivate bewährt, die flüssig, von niedriger Viskosität, mit dem Binder vollständig mischbar und gut in den Treibstoff einarbeitbar sind. Häufig werden n-Butylferrocen oder 2,2-(Bisethylferrocenyl)propan, mit altem Markennamen auch als Catocen® bezeichnet, eingesetzt. Sie zeigen jedoch die unerwünschte Eigenschaft der Migration, d. h. sie wandern aus der kautschukelastischen Bindermatrix des Feststoffs in das umgebende Isolationsmaterial. Das führt zu einem unregelmäßigen Abbrand, einer Verschlechterung der Alterungsbeständigkeit und u. U. zur Bildung hochempfindlicher Randschichten.

Zur Lösung dieses Problems wurden relativ komplexe Ferrocenderivate entwickelt, die ein deutlich reduziertes oder gar kein Migrationsverhalten aufweisen. Ein polymergebundenes Derivat, das diese Anforderungen erfüllt, ist

Butacen® (vgl. EP 169 130 und EP 171 307). Butacen® beinhaltet einen Ferrocenkomplex, der über einen Kohlenwasserstoff-spacer und einem Silankopplungsreagenz an ein Polybutadienpräpolymer gebunden ist. Es ist in einem Compositttreibstoff, der Ammoniumperchlorat, Aluminium und hydroxyterminiertes Polybutadien als Binder enthält, leicht einarbeitbar. Durch den geringen Gehalt an aktivem Eisenkomplex ist jedoch eine sehr viel höhere Zugabemenge erforderlich, um die gleiche abbrandgeschwindigkeitserhöhende Wirkung zu erzielen wie ein migrierendes Ferrocenderivat. Zudem ist das Butacen® nur mit einem aufwendigen und komplexen Herstellungsverfahren zugänglich. Erhöhte Zugabemenge und aufwendige Herstellung bedingen einen wesentlichen höheren Preis für den Einsatz, als es bei Catocen® oder n-Butylferrocen der Fall ist.

Es existieren auch Entwicklungen (z. B. US 3 932 240), bei denen Ferrocenderivate mit endständigen Hydroxyl- oder Isocyanatgruppen auf reaktivem Wege in die Kunststoffmatrix der Festtreibstoffe eingebunden werden. Diese Ferrocen-derivate sind häufig nicht mit den Reaktivbindersystemen heutiger Rakteten-treibstoffe mischbar oder sie beeinträchtigen im erheblichen Maße die Gießbarkeit und Verarbeitbarkeit des Treibstoffslurries oder die mechanischen Eigenschaften des fertigen Treibstoffs. Sechs solcher Hydroxylgruppen enthaltende Ferrocenderivate sind aus US-A-3 968 126 bekannt.

Aus der US 3 878 233 sowie aus der US 3 957 840 sind Verfahren zur Herstellung von Diferrocenylpentanolen insbesondere 4,4' - Diferrocenylpentanol-1 bekannt. Die Eignung der letztgenannten Substanz als Abrandmodifikator wird in der US 3 932 240 beschrieben. Diese Substanz ist jedoch im Grundzustand fest und im Treibstoff bei hoher Konzentration nicht verarbeitbar. Sie erfüllt damit nicht die für die Treibstoffherstellung wichtige Voraussetzung leicht eingearbeitet werden zu können.

US-A-5 281 286 beschreibt ein Verfahren zur Mikrocoacervierung von Ferrocen-(derivaten) in einer Wasser/Polyol-Mischung. Das Produkt dieses Verfahrens kann als Abbrandmoderator für Treibstoffe eingesetzt werden. Als geeignetes Ferrocenderivat wird 2.2 -(Bisethylferrocenyl)propan (Catocen®) genannt. Das Verfahren ist vergleichsweise aufwendig.

Aus INT. ANNU. CONF. ICT, 1994, Seiten 105/1-105/21 sind verschiedene zweikernige Ferrocenderivate als Abbrandmodfikatoren für Compositreibstoffe bekannt. Untersucht wurden die Abbrand- und Migrationseigenschaften dieser Substanzen. Zwei dieser Substanzen sowie ihre Eignung als Abbrandmoderatoren für Raketen-Festkörpertreibstoffe werden auch schon in INT. ANNU. CONF. ICT, 1993, Seiten 71-1 bis 71-19 beschrieben.

In GAODENG XUEXAO HUAXUE XUEBAO, Bd. 16, Nr.7,1995 Seiten 1066-1068 werden die Ergebnisse elektochemischer Untersuchungen an neun verbrückten Dimeren von Alkylferrocenderivaten beschrieben und es wird gefunden, dass sich das zweite Oxidationspotential reziprok proportional zur katalytischen Aktivität als Abbrandmoderator verhält.

Aufgabe der vorliegenden Erfindung ist es, neuartige Ferrocenverbindungen zur Verfügung zu stellen. Sie sollen insbesondere als Abbrandmodifikatoren für Festtreibstoffe geeignet sein. Für diesen Verwendungszweck sollen sie ein gutes Abbrandverhalten aufweisen, nicht migrieren und leichter synthetisierbar sein als bislang bekannte nichtmigrierende Abbrandmodifikatoren. Des weiteren sollen sie einen hohen Eisengehalt bezogen auf das Molekulargewicht, eine niedrige Viskosität und einen niedrigen Dampfdruck aufweisen.

Erfindungsgemäß wurde diese Aufgabe gelöst durch Ferrocenverbindungen gemäß Anspruch 1.

In Festtreibstoffen können die erfindungsgemäßen Ferrocenverbindungen sowohl als Einzelverbindungen als auch in Gemischen eingesetzt werden. Vorzugsweise sind sie in Festtreibstoffen in einer Menge von 0,1 bis 6,0 Gew.-%, bezogen auf die Gesamtmenge Festtreibstoff, enthalten.

Die erfindungsgemäßen Verbindungen weisen eine flüssige Konsistenz mit nicht zu hoher Viskosität sowie eine gute Mischbarkeit mit den Binderpolymeren auf und haben über ihre OH-Gruppen eine eindeutige reproduzierbare Bindungsfunktionalität mit konstanten Äquivalenzwerten bzw. OH-Zahlen. Sie gewährleisten eine gleichbleibende Gießviskosität fertig gemischter Treibstoff-slurries, ohne die Härtungsreaktion bzw. die Topfzeit negativ zu beeinflussen. Sie zeigen darüber hinaus keine wesentliche Beeinträchtigung der kautschukelastischen Eigenschaften des Binderpolymeren. Sie sind in der Festtreibstoffmatrix oxidationsstabil, so daß die Stabilität des Treibstoffes nicht beeinträchtigt wird. Die sicherheitstechnischen Eigenschaften des Treibstoffes werden durch Einbindung der erfindungsgemäßen Substanzen nicht negativ beeinflußt. Durch direkten Einbau dieser Ferrocenverbindungen in das Polymergerüst der Treibstoffmatrix wird ein Herauswandern (Migration) praktisch völlig unterbunden.

Die erfindungsgemäßen Ferrocenderivate sind im Prinzip in gleicher Weise herstellbar, wie die in der US 3 878 233 beschriebenen Substanzen. Geeignete Ausgangssubstanzen sind beispielsweise Ketomonocarbonsäuren, wie Acetessigsäure, 3-Acetylpropionsäure oder 4-Acetylbuttersäure. Erfindungsgemäße Ferrocenderivate mit 2 funktionellen OH-Gruppen lassen sich erhalten, wenn man als Ausgangssubstanz Ketodicarbonsäuren wie 3-Oxoglutarsäure oder 4-Oxopimelinsäure oder acetylierte Dicarbonsäuren wie 2-Acetylbernsteinsäure oder 2-Acetylglutarsäure einsetzt. Vorzugsweise lassen sich auch die Ester der vorgenannten Säuren, insbesondere die Ester aus der Umsetzung mit niedermolekularen Alkoholen, insbesondere Methanol, als Ausgangssubstanzen einsetzen.

Die Umsetzung dieser Substanzen mit Alkylferrocen zu den erfindungsgemäßen Derivaten erfolgt vorzugsweise säurekatalysiert. Anschließend werden die Carboxyl- bzw. Estergruppen zu $CH_2OH$-Gruppen reduziert. Vor-

zugsweise erfolgt dies mittels katalytisch aktivierten Wasserstoff (z. B. Zink in Eisessig) oder Lithiumaluminiumhydrid.

Des weiteren betrifft die Erfindung die Verwendung der erfindungsgemäßen Ferrocenderivate als Abbrandmodifikatoren in Festtreibstoffen für Raketenantriebe und für Gasgeneratoren.

Vorzugsweise enthält ein solcher Festtreibstoff, auch Composit-Festtreibstoff genannt, ein kristallines anorganisches Oxidationsmittel, einen Binder mit einem flüssigen, mehrfach OH-substituierten Präpolymer, mindestens ein Verknüpfungsreagenz und weitere übliche Zusatzstoffe, wie polymerspezifische Weichmacher, Antioxidantien und Haftvermittler. Das enthaltende erfindungsgemäße Ferrocenderivat wird über das Verknüpfungsreagenz direkt an den Binder angekoppelt.

Die erfindungsgemäß vorgeschlagenen Ferrocenderivate lassen sich besonders vorteilhaft in solche Polyurethanbinder einbauen, deren Präpolymer ein hydroxyterminiertes Polybutadien (HTPB), Polyesterpolyol oder Polyetherpolyol ist. Die hydroxyterminierten Polyurethanpräpolymere weisen vorzugsweise eine OH-Funktionalität von 2 bis 3 und ein bestimmtes mittleres Molekulargewicht auf. Für HTPB liegt dieses bei 400 bis 4000, vorzugsweise bei 1000 bis 3000. Die hydroxyterminierten Polyester- und Polyetherpräpolymeren haben dagegen ein bevorzugtes mittleres Molekulargewicht von 300 bis 3000 vorzugsweise von 800 bis 2000.

Als Verknüpfungsreagentien kommen di- und/oder trifunktionelle Isocyanate in Frage, vorzugsweise Isophorondiisocyanat (IPDI), Hexamethylendiisocyanat (HDI), Dimeryldiisocyanat (DDI), Toluoldiisocyanat (TDI) oder als Biuret- oder Uretdion mehrfach verknüpfte HDI-Derivate oder Mischungen derselben.

Beim Einsatz difunktioneller Isocyanate können zur Verbesserung der Vernetzung niedermolekulare Triole, z. B. Trimethylolpropan, Trimethylolethan oder auch 1, 2, 4-Butantriol, 1, 2, 6-Hexantriol oder Polyether, Polyester oder Alkane mit jeweils drei oder mehr funktionellen OH-Gruppen eingesetzt werden.

Bei Einbindung der erfindungsgemäßen Ferrocenderivate mit einer funktionellen OH-Gruppe werden vorzugsweise trifunktionelle Isocyanate oder difunktionelle Isocyanate in Verbindung mit einem vernetzenden Triol eingesetzt. Für einen Treibstoff mit HTPB-Binder eignet sich insbesondere ein System aus Trimethylolpropan und IPDI. Bei Einbindung der erfindungsgemäßen Ferrocenderivate mit zwei funktionellen OH-Gruppen in ein auf hydroxyterminierten Präpolymeren aufgebautes Bindersystem verwendet man vorzugsweise eine entsprechende äquivalente Menge Diisocyanat. Für HTPB gebundene Treibstoffe empfehlen sich IPDI oder Dimeryldiisocyanat (DDI) als Härter. Falls die OH-Funktionalität des Präpolymeren zwei oder niedriger ist, können ebenfalls vernetzende Triole wie Trimethylolpropan zugesetzt werden.

In einem Composit-Festtreibstoff mit dem erfindungsgemäßen Abbrandmodifikator können als Oxidationsmittel Ammoniumperchlorat (AP), Ammoniumnitrat (AN), Kaliumperchlorat oder andere Perchlorate sowie Mischungen dieser Substanzen eingesetzt werden. Vorzugsweise kommt AP in einer Menge von 30 bis 88 Gew.-% des Treibstoffes zur Anwendung. Weitere Bestandteile sind vorzugsweise 10 bis 45 Gew.-% Polyurethanbinder, bestehend aus Präpolymer, Härter und ggf. weiteren Zusätzen wie polymerspezifische Weichmacher, Anti-Oxidationsmittel, Stabilisatoren und Haftvermittler. Das erfindungsgemäße Ferrocenderivat ist vorzugsweise in einer Menge von 0,1 bis 6 Gew.-% im Festtreibstoff enthalten.

Zur Erhöhung der Treibstoffenergie, Abbrandtemperatur und spezifischen Impuls der ausströmenden Gase können dem Treibstoff metallische Brennstoffe wie Aluminium, Magnesium, Aluminium/Magnesiumlegierungen oder Bor, insbesondere in fein pulverisierter Form mit einer mittleren Korngröße von 1 bis 500 μm, in bevorzugten Mengen von 1 bis 25 Gew.-% und/oder energiereiche Nitramine, wie Hexogen und/oder Oktogen, in einer bevorzugten Menge von 1 bis 40 Gew.-%, insbesondere 1 bis 30 Gew.-% zugesetzt werden. Niederenergetische Raketenoder Gasgeneratortreibstoffe können auch Nitroguanidin enthalten.

Eine bevorzugte Zusammensetzung des Composit-Festtreibstoffes enthält 40 bis 88 Gew.-% AP, 10 bis 45 Gew.-% Polyurethanbinder, 0,1 bis 6,0 Gew.-% Ferrocenderivat und 1 bis 30 Gew.-% metallischen Brennstoff, insbesondere Aluminium.

Zur Herstellung des Treibstoffes wird das flüssige Präpolymer mit dem Weichmacher und den Additiven, dem Ferrocenderivat, dem Brennstoff und dem Oxidator zu einem Slurry gemischt und anschließend Härter unter weiterem Mischen zugegeben. Vorzugsweise wird die Herstellung in einem auf 30 bis 60 °C temperierten und evakuierbaren Vertikalkneter mit Knethaken oder Planetenrührwerk durchgeführt. Dabei werden die Binderkomponenten Präpolymer, Weichmacher und Zusatzstoff zusammen mit dem erfindungsgemäßen Ferrocenderivat und den zur Vernetzung benötigten Triolen vorgemischt, anschließend die Metallpulver, Nitramine und zuletzt der vorgewärmte Oxidator portionsweise zugegeben. Nach gutem Durchkneten wird der homogen pastösen oder fließfähigen Masse der Härter zugemischt. Der entstehende Treibstoff-slurry ist in der Regel gut gieß- und verlaufsfähig. Er wird im allgemeinen zur Herstellung von Treibsätzen direkt in die Brennkammer oder einen entsprechenden Brennkammereinsatz gegossen und bei etwa 50 bis 70 °C über mehrere Stunden ausgehärtet. Der entformte Treibstoff besitzt gute mechanische Eigenschaften ist über längere Zeit lagerstabil und zeigt ein gutes Abbrandverhalten.

**Herstellung von 4,4'- Bis (ethylferrocenyl)-1-pentanol (BEFPO)**

Aus 340,3 g Methanol und 319,4 g konzentrierter Schwefelsäure wurde eine Lösung hergestellt, zu der 350 g Ethylferrocen zugegeben wurde. Bei einer Reaktionstemperatur von ca. 80 °C wurde innerhalb von 60 Minuten 106,6 g Levulinsäuremethylester zugegeben und weitere 5 Stunden am Rückfluß bei 80 °C gerührt. Anschließend wurde extrahiert, überschüssige Schwefelsäure neutralisiert und das Produkt gereinigt. Nicht umgesetztes Ethylferrocen und Levulinsäuremethylester wurde abdestilliert und das verbleibende Produkt mit 250 ml Diethylether und 50 ml Tetrahydrofuran versetzt. Dieser Lösung wurden portionsweise 10 g Lithiumaluminiumhydridpulver zugegeben und ca. 2 Stunden unter Rückfluß bei 35 °C gerührt. Nach anschließender Aufarbeitung und Vakuumdestillation wurden 126,1 g der gewünschten Substanz erhalten. Das Produkt ist bei Raumtemperatur flüssig und besitzt eine vergleichsweise niedrige Viskosität. In dieser Form wurde es bei 60 °C in einen hochenergetischen Composit-Treibstoff folgender Zusammensetzung eingearbeitet:

**Herstellung und Prüfung eines Festtreibstoffes**

**Feststoff, 85 Gew.-% folgender Zusammensetzung**

| | | Gew% |
|---|---|---|
| Ammoniumperchlorat | 30 µm | 49 |
| Ammoniumperchlorat | 5 µm | 21 |
| Aluminiumpulver | 5 µm | 15 |

**Binder, 15 Gew.-% folgender Zusammensetzung**

| | Gew% |
|---|---|
| Ferrocenderivat BEFPO: | 1,5 |
| hydroxyterminiertes Polybutadien R 45-M (Atochem) | 8,17 |
| Haftvermittler: Tepanol® HX 878 (3M): | 0,14 |
| Härter: Difunktionelles Isocyanat, IPDI (Hüls): | 1,72 |
| Vernetzer: Trimethylolpropan (TMP): | 0,32 |
| Antioxidanz: Di-tert.-butylphenol (Irganox® 565); Ciba Geigy | 0,15 |
| Weichmacher: Diisooctyladipat (DOA) | 3,0 |

Das flüssige Ferrocenderivat (BEFPO) wird zunächst mit den Binderkomponenten R45M, TMP,Tepanol®, Irganox® und DOA vorgemischt und auf 60°C erwärmt. Dann werden portionsweise das vorgewärmte Aluminiumpulver und Ammoniumperchlorat zugegeben und die Masse mindestens 4 Stunden geknetet, bis sie homogen und weitgehend fließfähig geworden ist. Nach Zugabe und ca. 10minütigem Einrühren des Isocyanathärters IPDI wird daraus ein Treibstoffslurry mit guter Gießfähigkeit und guten Verlaufseigenschaften.

Nach Messung der Viskosität wird der Slurry unter Vakuum in die vorgewärmte Treibsatzform gegossen und dort bei 60° C für 7 bis 8 Tage ausgehärtet. Nach Entformung wird ein fester Treibsatz mit guten mechanischen Eigenschaften erhalten. Im einzelnen werden folgende Eigenschaften bestimmt:

| | |
|---|---|
| Gießviskosität (60° C) | 184 Pas |
| Reibempfindlichkeit | 36 N |
| Schlagempfindlichkeit | 3 Nm |

**mechanische Eigenschaften bei 20° C (50 mm/min)**

| | |
|---|---|
| Zugfestigkeit | 1,34 $N/mm^2$ |
| Reißdehnung | 22 % |
| E-Modul | 8,62 $N/mm^2$ |

**Abbrandeigenschaften bei 20° C**

| Abbrandgeschwindigkeit r | a) mit BEFPO | b) ohne BEFPO |
|---|---|---|
| bei p = 2 Mpa | 20,3 mm/s | 13,5 mm/s |
| bei p = 10 Mpa | 36,6 mm/s | 27,3 mm/s |
| Druckexponent n | 0,34 (2-25 MPa) | 0,47 (2-25 MPa) |

Abbildung 1 zeigt dazu das Abbranddiagramm lg r = f (lg p) des BEFPO-haltigen Treibstoffs im Vergleich zur Formulierung ohne Abbrandkatalysator. Die abbrandsteigernde Wirkung des Ferrocenderivates ist gut zu erkennen.

Ein Migrationstest des BEFPO-haltigen Treibstoffs im Verbund mit einer Polybutadienisolation durch siebentägige Lagerung bei 80° C ergibt nach Analyse von Treibstoff und Isolation eine vernachlässigbare geringe Abnahme der Eisenkonzentration im Treibstoff von 0,34 auf 0,33 % aber keinen Anstieg des nachweisbaren Eisengehalts in der Isolation.

Die erfindungsgemäßen Substanzen insbesondere BEFPO erfüllen damit sämtliche wesentliche Forderungen an einen Abbrandmodifikator für einen Festtreibstoff, nämlich gute Einarbeitbarkeit ohne Beeinträchtigung der Gießviskosität des Treibstoff-slurries, gute Netzwerkbildung unter Beifügung eines vernetzenden Triols, keine Beeinträchtigung der mechanischen Treibstoffempfindlichkeit und - stabilität sowie hohe Wirksamkeit in bezug auf Steigerung der Abbrandgeschwindigkeit und Senkung des Druckexponenten.

## Patentansprüche

**1.** Ferrocenderivate der allgemeinen Formel

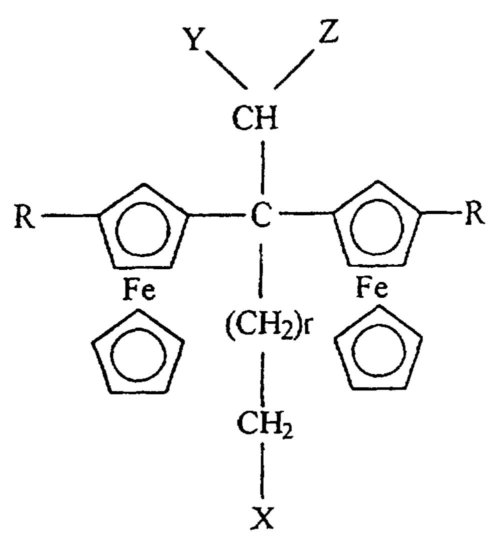

mit

X = H oder OH
Y = H oder $CH_2$ OH
Z = $(CH_2)_s$-$CH_2OH$
R = geradkettiger oder verzweigter Alkylrest mit 2 bis 6 C-Atomen
r = 0 bis 8, bevorzugt 0 bis 2
s = 0 bis 8, bevorzugt 1 und 2.

**2.** Verwendung von Ferrocenderivaten gemäß Anspruch 1 als Abbrandmodifikatoren in Composit-Festtreibstoffen.

**3.** Verwendung nach Anspruch 2, **dadurch gekennzeichnet, daß** die Composit-Festtreibstoffe ein kristallines anorganisches Oxidationsmittel, einen Binder mit einem flüssigen mehrfach OH-substituierten Präpolymer, mindestens ein Verknüpfungsreagenz, polymerspezifische Weichmacher, Antioxidantien und Haftvermittler sowie ggf. einen metallischen Brennstoff und/oder ein energiereiches Nitramin enthalten und das Ferrocenderivat gemäß Anspruch 1 über das Verknüpfungsreagenz mit dem Polymerbinder gekoppelt ist.

**4.** Verwendung nach mindestens einem der vorstehenden Ansprüche, **dadurch gekennzeichnet, daß** das mehrfach OH-substituierte Präpolymer ein Polyurethanpräpolymer in Form eines hydroxyterminierten Polybutadiens (HTPB), Polyester- oder Polyetherpolyols ist.

**5.** Verwendung nach mindestens einem der vorstehenden Ansprüche, **dadurch gekennzeichnet, daß** die Verknüpfungsreagentien di- oder trifunktionelle Isocyanate, insbesondere Isophorondiisocyanat (IPDI), Dimeryldiisocyanat (DDI), Hexamethylendiisocyanat (HDI), Toluoldiisocyanat (TDI) oder als Biuretoder Uretdion mehrfach verknüpfte HDI-Derivate oder Mischungen derselben sind.

**6.** Verwendung nach mindestens einem der vorstehenden Ansprüche, **dadurch gekennzeichnet, daß** bei Einsatz difunktioneller Isocyanate als Vernetzer niedermolekulare Triole, insbesondere Trimethylolpropan, Trimethylolethan, 1,2,4-Butantriol, 1,2,6-Hexantriol oder kurzkettige Polyether, Polyester oder Alkane mit jeweils 3 oder mehr funktionellen OH-Gruppen verwendet werden.

**7.** Verwendung nach mindestens einem der vorstehenden Ansprüche, **dadurch gekennzeichnet, daß** der Festtreibstoff 10 bis 45 Gew.-% Polyurethanbinder, gebildet aus Präpolymer, Verknüpfungsreagenz und ggfs. Vernetzer, enthält.

**8.** Verwendung nach mindesteris einem der vorstehenden Ansprüche, **dadurch gekennzeichnet, daß** als Oxidationsmittel Ammoniumperchlorat (AP) und/oder - nitrat (AN), vorzugsweise in Mengen von 40 bis 88 Gew.-%, eingesetzt wird.

**9.** Verwendung nach mindestens einem der vorstehenden Ansprüche, **dadurch gekennzeichnet, daß** der metallische Brennstoff Aluminium, Magnesium, eine Aluminium/Magnesium-Legierung oder Bor ist und vorzugsweise zu 1 bis 30 Gew.-% im Treibstoff enthalten ist.

**10.** Verwendung nach mindestens einem der vorstehenden Ansprüche, **dadurch gekennzeichnet, daß** das energiereiche Nitramin Hexogen und/oder Oktogen ist und vorzugsweise zu 1 bis 30 Gew.-% im Treibstoff enthalten ist.

**11.** Verwendung nach mindestens einem der vorstehenden Ansprüche, **dadurch gekennzeichnet, daß** die erfindungsgemäßen Ferrocenderivate gemäß Anspruch 1 dem Treibstoff in Mengen von 0,1 bis 6 Gew.-% zugesetzt werden.

## Claims

**1.** Ferrocene derivatives of the general formula

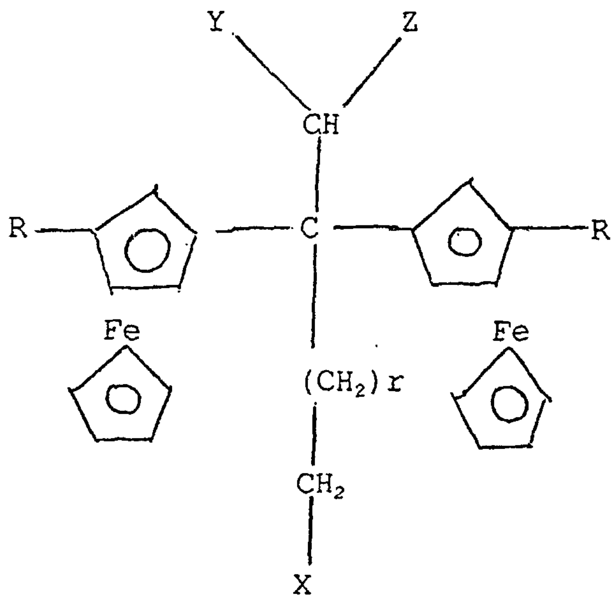

with
X = H or OH
Y = H or $CH_2OH$
Z = $(CH_2)_s$-$CH_2OH$
R = straight-chain or branched alkyl radical with 2 to 6 C atoms
r = 0 to 8, preferably 0 to 2
s = 0 to 8, preferably 1 and 2.

**2.** Use of ferrocene derivatives according to Claim 1 as burning rate modifiers in composite solid propellants.

**3.** Use according to Claim 2,
**characterised in that** the composite solid propellants contain a crystalline anorganic oxidation means, a binder having a liquid repeatedly OH-substituted prepolymer, at least one cross-linkage reagent, polymer-specific plasticisers, antioxidants and bonding agents and also possibly a metallic fuel and/or an energy-rich nitramine and the ferrocene derivative according to Claim 1 is coupled via the cross-linkage reagent with the polymer binder.

**4.** Use according to at least one of the preceding Claims,
**characterised in that** the repeatedly OH-substituted prepolymer is a polyurethane prepolymer in the form of a hydroxy-terminated polybutadiene (HTPB), polyester or polyether polyol.

**5.** Use according to at least one of the preceding Claims,
**characterised in that** the cross-linkage reagents are difunctional or trifunctional isocyanates, in particular isophorone diisocyanate (IPDI), dimeryl diisocyanate (DDI), hexamethylene diisocyanate (HDI), toluene diisocyanate (TDI) or HDI derivatives or mixtures thereof that are repeatedly cross-linked as biruetdion or uretdion.

**6.** Use according to at least one of the preceding Claims,
**characterised in that** when using difunctional isocyanates as cross-linkage agents, low-molecular triols, in particular trimethylol propane, trimethylol ethane, 1,2,4-butanetriol, 1,2,6-hexantriol or short-chain polyethers, polyesters or alkanes each having 3 or more functional OH groups are used.

**7.** Use according to at least one of the preceding Claims,
**characterised in that** the solid propellant contains 10 to 45 % by weight polyurethane binders, made from prepolymers, cross-linkage reagent and possibly cross-linkage agents.

**8.** Use according to at least one of the preceding Claims,

**characterised in that** ammonium perchlorate (AP) and/or ammonium nitrate (AN) is used as the oxidation means, preferably in quantities of 40 to 88 % by weight.

**9.** Use according to at least one of the preceding Claims, **characterised in that** the metallic fuel is aluminium, magnesium, an aluminium/magnesium alloy or boron and is preferably contained in the propellant at 1 to 30 % by weight.

**10.** Use according to at least one of the preceding Claims, **characterised in that** the energy-rich nitramine is hexogen and/or octogen and is preferably contained at 1 to 30 % by weight in the propellant.

**11.** Use according to at least one of the preceding Claims, **characterised in that** the ferrocene derivates according to the invention that are specified Claim 1 are added to the propellant in quantities of 0.1 to 6 % by weight.

## Revendications

**1.** Dérivés de ferrocène de formule générale

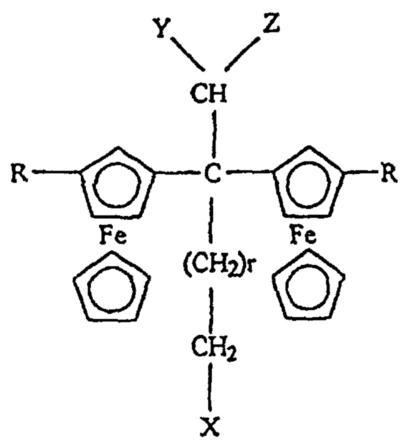

dans laquelle
X = H ou OH
Y = H ou $CH_2OH$
Z = $(CH2)_s$-$CH_2OH$
R = radical alkyle à chaîne droite ou ramifiée comportant de 2 à 6 atomes de carbone,
r = 0 à 8, de préférence 0 à 2
s = 0 à 8, de préférence 1 et 2,
ainsi que leur utilisation.

**2.** Utilisation de dérivés de ferrocène selon la revendication 1 comme modificateurs de combustion dans les carburants solides composites.

**3.** Utilisation selon la revendication 2, **caractérisée en ce que** les carburants solides composites contiennent un oxydant inorganique cristallin, un liant avec un prépolymère comportant plusieurs substitutions OH liquides, au moins un réactif de jonction, un plastifiant spécifique du polymère, des anti-oxydants et des agents favorisant l'adhérence ainsi que le cas échéant un combustible métallique et/ou une nitramine riche en énergie, et le dérivé de ferrocène selon la revendication 1 est couplé au liant polymère par l'intermédiaire du réactif de jonction.

**4.** Utilisation selon au moins une des revendications précédentes, **caractérisée en ce que**

le prépolymère comportant plusieurs substitutions OH est un prépolymère de polyuréthane sous la forme d'un polybutadiène à terminaison hydroxy (HTPB), un polyester- ou polyéther-polyol.

**5.** Utilisation selon au moins une des revendications précédentes,
**caractérisée en ce que**
les réactifs de jonction sont des isocyanates di- ou trifonctionnels, en particulier le diisocyanate d'isophorone (IPDI), le diisocyanate de diméryle (DDI), le diisocyanate d'hexaméthylène (HDI), le diisocyanate de toluène (TDI) ou des dérivés d'HDI à jonction multiple comme biuret- ou uret-dione, ou des mélanges de ces corps.

**6.** Utilisation selon au moins une des revendications précédentes,
**caractérisée en ce que**
lorsqu'on emploie des isocyanates bifonctionnels comme réticulants on utilise des triols à faible poids moléculaire, en particulier le triméthylol propane, le triméthylol éthane, le 1,2,4-butane triol, le 1,2,6-hexane triol ou des polyéthers, polyesters ou alcanes à chaîne courte comportant à chaque fois trois groupes OH fonctionnels ou plus.

**7.** Utilisation selon au moins une des revendications précédentes,
**caractérisée en ce que**
le carburant solide contient de 10 à 45 % en poids de liant de polyuréthane, formé d'un prépolymère, d'un réactif de jonction et le cas échéant d'un agent réticulant.

**8.** Utilisation selon au moins une des revendications précédentes,
**caractérisée en ce qu'**
on utilise comme oxydant le perchlorate d'ammonium (AP) et/ou le nitrate d'ammonium (AF), de préférence à des quantités de 40 à 88 % en poids.

**9.** Utilisation selon au moins une des revendications précédentes,
**caractérisée en ce que**
le combustible métallique est l'aluminium, le magnésium, un alliage aluminium/magnésium ou le bore et est contenu de préférence à 1 à 30 % en poids dans le carburant.

**10.** Utilisation selon au moins une des revendications précédentes,
**caractérisée en ce que**
la nitramine riche en énergie est l'hexogène et/ou l'octogène et est contenue de préférence à 1 à 30 % en poids dans le carburant.

**11.** Utilisation selon au moins une des revendications précédentes,
**caractérisée en ce que**
les dérivés de ferrocène selon l'invention sont ajoutés conformément à la revendication 1 au carburant à des quantités de 0,1 à 6 % en poids.

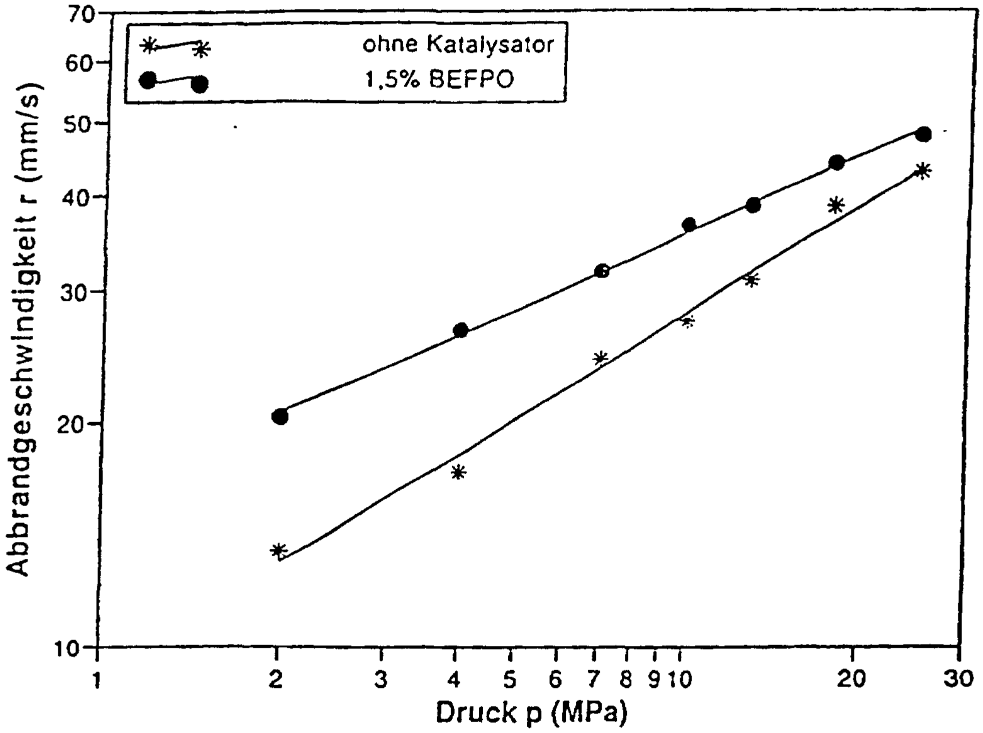


Abbildung1: Abbranddiagramm lg r = f(lgp) des AP/HTPB-Composittreibstoffs mit BEFPO-Ferrocenderivat und ohne Katalysator